# FASCICULE DE BREVET EUROPEEN

(11) **EP 0 875 949 B1**
(45) Date de publication et mention de la délivrance du brevet: **12.03.2003**
(21) Numéro de dépôt: 98401072.8
(22) Date de dépôt: 30.04.1998
(51) Int. Cl.: H01M 2/12, F16K 17/04

(54) **Bouchon à soupape pour accumulateur électrique**
Verschlussstopfen für elektrische Speicherbatterie
Vent plug for electrical accummulator

(30) Priorité: 02.05.1997 FR 9705455
(43) Date de publication de la demande: 04.11.1998
(73) Titulaire: ALCATEL, 75008 Paris (FR)
(72) Inventeur: Verhoog, Roelof, 33750 Camarsac (FR); Genton, Alain, 33290 Parempuyre (FR)
(74) Mandataire: Korakis-Ménager, Sophie

(56) Documents cités:
- EP-A- 0 554 535
- DE-C- 806 301
- FR-A- 1 451 530
- FR-A- 2 315 773

## Description

La présente invention concerne un bouchon à soupape pour accumulateur électrique.

On connaît de nombreux types de soupapes pour accumulateurs.

Dans une soupape classique à déplacement de membrane, représentée par exemple par le document FR-A-2.645.350, il existe un jeu important entre le piston et le siège pour éviter tout blocage, par exemple en cas de poussière. Le déplacement du piston n'est pas parfaitement axial : le piston ne retombe pas toujours exactement au même endroit, d'où un risque de fuite.

Dans une soupape à piston à double action, représentée par exemple par le document EP-A-0.504.573, le piston supérieur monte en cas de surpression interne, laissant le gaz s'échapper latéralement. En cas de dépression interne, le piston inférieur descend et le gaz externe pénètre par l'orifice central du piston supérieur. Il s'agit en fait de la combinaison de deux soupapes "classiques", qui présentent donc un risque de fuite.

Le document US-A-5.388.615 montre une soupape sans déplacement de membrane adaptée aux faibles variations de pression, mais ne convenant pas à des variations de pressions typiquement de 0,5 à environ 3 bars relatifs, comme envisagé dans la présente invention. De telles variations sont en revanche du domaine des soupapes sans déplacement de membrane connues par les documents FR-A-1.451.530 et FR-A-2.315.773. Ceux-ci font connaître un bouchon à soupape pour accumulateur électrique, destiné à mettre le volume intérieur d'un accumulateur en communication avec l'atmosphère seulement au-delà d'une pression déterminée supérieure à la pression atmosphérique, du type qui comprend un corps comportant une portion s'adaptant de façon étanche mais amovible sur un orifice dudit accumulateur et comportant un siège de clapet annulaire central communiquant avec l'atmosphère mais normalemént obturé par une pièce de fermeture et une zone annulaire dune membrane-clapet ayant une surface nettement plus grande que la section du siège et étant fixée par son bord périphérique audit corps, ladite membrane étant sollicitée dans le sens de l'obturation du siège par la pression atmosphérique régnant sur une de ses faces et par un piston appuyant sur ladite face grâce à un ressort taré en fonction de la pression déterminée précitée, et étant sollicitée dans le sens de l'ouverture du siège par la pression régnant dans l'accumulateur et agissant sur au moins une partie de la face opposée de ladite membrane, ledit ressort s'appuyant à l'arrière sur le fond d'une chambre formée dans le corps et contenant le piston et ledit ressort, un évent qui fait communiquer ladite chambre avec l'atmosphère étant prévu dans ledit fond ou près dudit fond. De telles soupapes, utilisant une membrane solide et un ressort, sont robustes et vieillissent bien. Cependant, dans la soupape connue, le siège de clapet est constitué par l'extrémité d'un conduit axial pratiqué dans le fond du corps et relié à l'atmosphère par un conduit transversal pris également dans le fond du corps. Le siège du clapet est normalement obturé par une pièce de fermeture constituée par la partie centrale de la membrane. Du fait de la présence du conduit transversal débouchant à l'atmosphère au voisinage du fond du corps, le bouchon de soupape connu se tient essentiellement au-dessus du couvercle du bac d'accumulateur et est donc assez encombrant.

Le but de l'invention est de réduire l'encombrement du bouchon à soupape sans déplacement de membrane connu tout en conservant ses avantages de robustesse et de longévité.

Ce but est atteint dans le cadre d'un bouchon présentant la configuration générale précitée du fait qu'en lieu et place des conduits pratiqués dans le fond du bouchon, le siège du clapet communique avec l'atmosphère au travers dune ouverture pratiquée dans le piston et la partie centrale de la membrane. Le gaz est ainsi évacué, par l'intermédiaire de ce trou, à la partie supérieure de la soupape. La soupape est ainsi moins volumineuse et plus facile à réaliser. Elle est particulièrement destinée aux batteries pour véhicules électriques où le volume pris par la batterie est un critère fort.

D'autres caractéristiques et avantages de l'invention ressortiront de la description suivante, pour laquelle on se réfèrera aux dessins annexés sur lesquels :
La figure 1 est une coupe longitudinale d'un bouchon à soupape de l'art antérieur ;
La figure 2 est une coupe longitudinale analogue d'un premier mode de réalisation d'un bouchon de soupape conforme à l'invention ;
La figure 3 est une section transversale selon la ligne III-III de la figure 2 ;
La figure 4 est une coupe longitudinale analogue d'un second mode de réalisation d'un bouchon de soupape conforme à l'invention ;

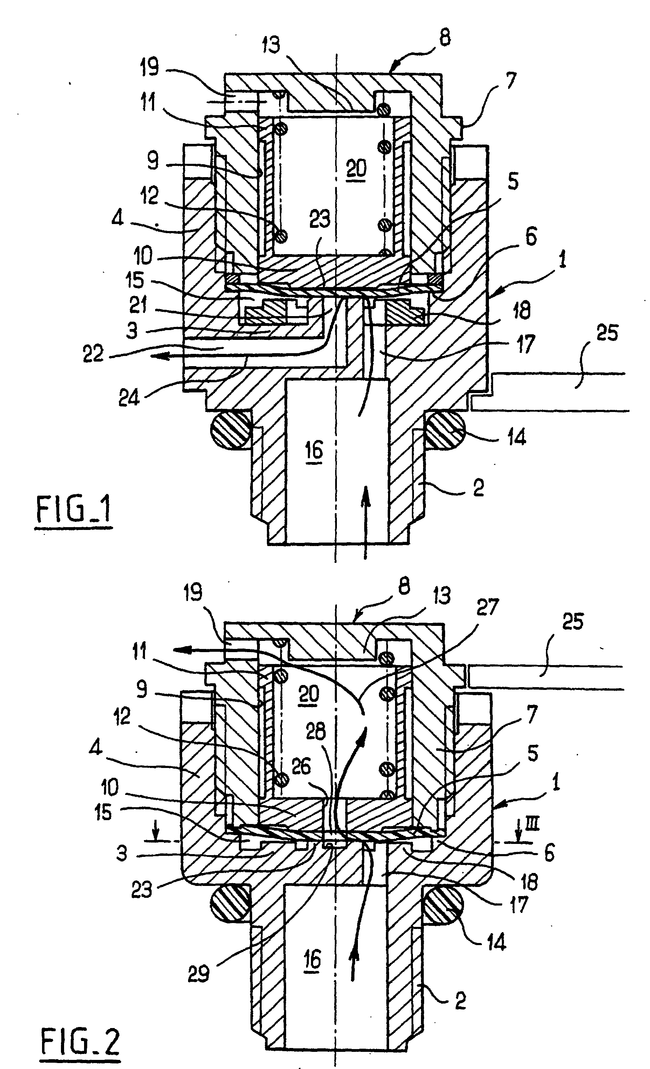

La figure 1 montre une soupape de l'art antérieur, connue par le document FR-A-1.451.530. Elle comprend un corps 1 qui est muni d'un embout fileté 2 destiné à être vissé dans un orifice de l'accumulateur, l'étanchéité se faisant au moyen d'un joint torique 14. Le corps 1 comporte un fond intérieur 3 et des parois cylindriques 4. Une membrane souple 5 est fixée par sa bordure périphérique sur un épaulement intérieur 6 des parois 4, où elle est retenue par l'appui d'un couvercle 7. Le couvercle 7 est en forme de gobelet renversé, avec un fond 8 (à sa partie supérieure) et une jupe cylindrique 9 vissée dans la paroi 4. L'intérieur du couvercle 7 forme une chambre 20 qui contient à sa partie inférieure un piston 10 d'appui sur la membrane 5, ce piston étant solidaire d'un guide 11 qui coulisse à l'intérieur de la jupe 9 du couvercle 7, et recevant la pression d'un ressort de compression 12 dont l'extrémité supérieure s'appuie sur le fond 8, centrée par un bossage 13 dudit fond. Un évent 19 prévu près ou dans le fond 8 du couvercle 7 fait communiquer la chambre 20 avec l'atmosphère.

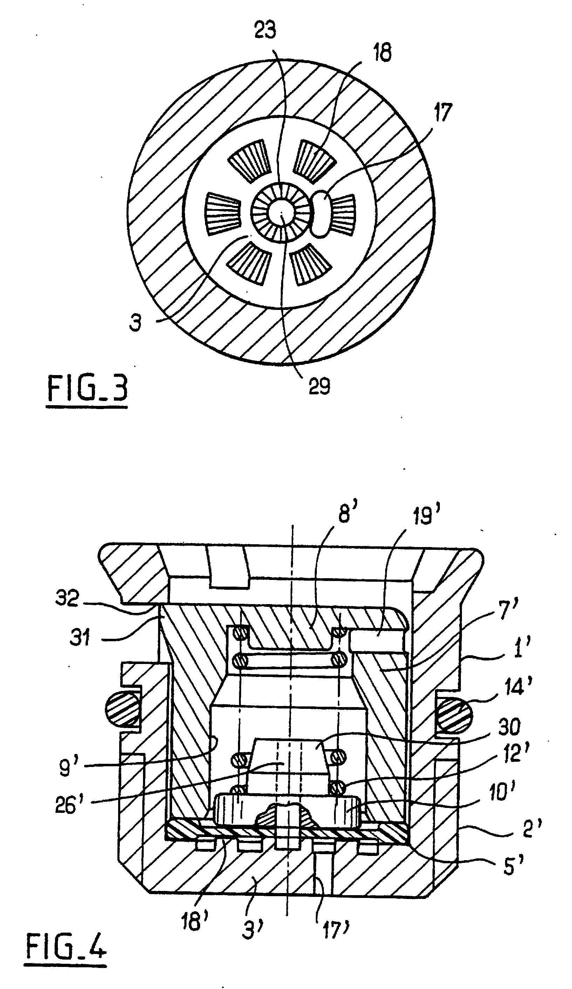

L'autre côté de la membrane 5 délimite avec le fond 3 et le bas des parois 4 une chambre de pression inférieure 15 qui communique avec le conduit intérieur 16 de l'embout fileté 2 par un passage 17 pratiqué dans le fond 3. Des bossages ou reliefs sectoriels 18 (cf. aussi figure 3) sont prévus sur la surface du fond 3 et empêchent un affaissement total de la membrane 5 avec collage sur le fond, lorsque la pression au sein de l'accumulateur est inférieure à la pression atmosphérique.

Ces éléments sont communs avec la présente invention et sont repris dans la figure 2 avec les mêmes références numériques.

Dans le bouchon à soupape connu, il est prévu dans le fond 3 du corps 1 un conduit axial 21 débouchant dans un conduit transversal 22 ouvert vers l'atmosphère. Le bord annulaire supérieur du conduit axial 21 forme le siège de clapet 23 contre lequel porte la membrane 5. Le clapet est fermé lorsque la force s'exerçant sur la face supérieure de la membrane 5, résultant de la combinaison de la pression atmosphérique et de la pression du ressort 12 appuyant par l'intermédiaire du piston 10 sur la face arrière de la membrane 5, est supérieure à la force s'exerçant sur la face inférieure de la membrane, résultant de la pression dans la chambre inférieure 15 qui est égale à la pression au sein de l'accumulateur. Si au contraire la seconde de ces forces surpasse la première, la membrane 5 se soulève et ouvre le clapet sur son siège 23 ; le gaz excédentaire peut alors s'échapper par les conduits 21 et 22 vers l'atmosphère, comme l'indique la flèche 24. Du fait que l'échappement se fait au niveau du fond 3, il faut que ce niveau soit au-dessus du couvercle 25 du bac d'accumulateur, comme le montre la position dudit couvercle, esquissée seulement à droite du bouchon.

Selon le mode de réalisation de l'invention représenté sur la figure 2, le bossage annulaire 23 formant siège de clapet est conservé, mais les conduits 21 et 22 sont supprimés (si l'on part d'une pièce existante de l'art antérieur, on peut combler ces conduits avec une résine). Le clapet est donc fermé d'un côté par la partie centrale 29 du fond 3 du corps. En revanche, la membrane 5 est percée en son centre, pour former un orifice 28 de diamètre inférieur au diamètre du siège 23. Le piston 10 est également percé d'un passage central 26. Le diamètre de l'orifice 28 et du passage 26 est par exemple de 0,9 mm.Quand la pression de l'accumulateur n'excède pas la pression prédéterminée de déclenchement, la soupape maintient l'étanchéité requise en plaquant la membrane 5 contre son siège de clapet 23. En revanche, quand la pression de l'accumulateur dépasse ladite pression déterminée, le gaz excédentaire s'échappe en empruntant le trajet désigné par la flèche 27, traversant successivement le passage 17, la chambre 15, l'orifice 28, le passage 26, la chambre 20 et l'évent supérieur 19. Grâce à cette disposition, il est possible de placer le couvercle 25 du bac en position haute par rapport au bouchon, comme représenté sur la figure 2. D'autre part, il est possible de réduire de quelques millimètres la hauteur totale du bouchon par rapport au bouchon connu du fait que le fond 3 peut être moins épais. A noter que le couvercle 7 peut être lié au corps 1 par vissage ou tout autre moyen de solidarisation (collage, soudage, clipsage). Le corps 1 peut aussi être fixé de différentes façons sur le bac de l'accumulateur (soudage, clipsage).

La figure 4 montre un second mode de réalisation de l'invention incorporant plusieurs variantes. D'une part, la construction générale de la soupape suit l'enseignement du document FR-A-2.315.773, à savoir que le couvercle 7' de soupape est clipsé dans le corps 1' grâce à des dents 31 (par exemple trois dents prévues à la périphérie du fond 8' du couvercle 7') s'encliquetant dans des évidements correspondants 32 formés dans le haut de la paroi intérieure du corps 1'. D'autre part, le piston 10' n'est plus guidé par les parois cylindriques 9' du couvercle 7', mais est maintenu axialement par le ressort lui-même 12' dont une extrémité est serrée sur le bossage du fond 8' et dont l'autre extrémité est serrée contre un bossage correspondant 30 prévu au dos du piston 10'. Le passage central 26' du piston se poursuit dans ce bossage 30. Une telle disposition du piston sans contact permet de supprimer les frottements et les problèmes liés à l'introduction de poussières, d'humidité ou même de glace (en cas de température négative). Le filetage 2' est réalisé ici sur le corps 1' lui-même. Pour le reste, on reconnaît la caractéristique de l'invention, c'est-à-dire le chemin d'évacuation du gaz excédentaire par les passages 17', 26' et 19' vers l'atmosphère.

## Revendications

1. Accumulateur électrique comprenant un bouchon à soupape, destiné à mettre le volume intérieur d'un accumulateur en communication avec l'atmosphère seulement au-delà d'une pression déterminée supérieure à la pression atmosphérique, du type qui comprend un corps (1) comportant une portion (2) s'adaptant de façon étanche mais amovible sur un orifice dudit accumulateur et comportant au niveau d'un fond intérieur (3) un siège de clapet annulaire central (23) communiquant avec l'atmosphère mais normalement obturé par une pièce de fermeture et une zone annulaire d'une membrane-clapet (5) ayant une surface nettement plus grande que la section du siège (23) et étant fixée par son bord périphérique audit corps, ladite membrane (5) étant sollicitée dans le sens de l'obturation du siège par la pression atmosphérique régnant sur une de ses faces et par un piston (10) appuyant sur ladite face grâce à un ressort (12) taré en fonction de la pression déterminée précitée, et étant sollicitée dans le sens de l'ouverture du siège par la pression régnant dans l'accumulateur et agissant, grâce à une ouverture (28) pratiquée dans le fond intérieur (3) du corps, sur au moins une partie de la face opposée de ladite membrane (5), ledit ressort (12) s'appuyant à l'arrière sur le fond (8) d'une chambre (20) formée dans le corps et contenant le piston (10) et ledit ressort (12), un évent (19) qui fait communiquer ladite chambre (20) et l'atmosphère étant prévu dans ledit fond (8) ou près dudit fond (8), **caractérisé en ce que** le siège de clapet (23) communique avec l'atmosphère au travers d'une ouverture (26, 28) pratiquée dans le piston (10) et la partie centrale de la membrane (5), la pièce de fermeture étant constituée par la partie centrale (29) du fond intérieur (3) du corps.

2. Accumulateur selon la revendication 1, dans lequel le fond intérieur (3) du corps comporte un bossage central formant le siège de clapet (23) et des bossages sectoriels (18).

## Claims

1. An electric storage cell comprising a valve cap designed to put the inside volume of a storage cell into communication with the atmosphere when the pressure in said volume exceeds a determined pressure greater than atmospheric pressure, said valve cap being of the type which comprises a body (1 ) including a portion (2) fitted in sealed but removable manner over an orifice of said storage cell, and including, level with an inside base (3), a central annular valve seat (23) in communication with the atmosphere but normally closed by a closure part and an annular zone of a valve membrane (5) having a much larger surface area than the section of the seat (23), and being fixed by its peripheral edge to said body, said membrane (5) being urged in the seat-closing direction by the atmospheric pressure existing on one of its faces, and by a piston (10) bearing on said face by means of a spring (12) calibrated as a function of the above-mentioned determined pressure, and being urged in the seat-opening direction by the pressure existing in the storage cell, and acting, by means of an opening (28) made in the inside base (3) of the body, on at least a portion of the opposite face of said membrane (5), the rear end of said spring (12) bearing on the endwall (8) of a chamber (20) formed in the body and containing the piston (10) and said spring (12), a vent (19) which puts said chamber (20) into communication with the atmosphere being provided in said endwall (8) or near to said endwall (8), **characterized in that** the valve seat (23) communicates with the atmosphere via an opening (26, 28) made in the piston (10) and in the central portion of the membrane (5), the closure part being constituted by the central portion (29) of the inside base (3) of the body.

2. A storage cell according to claim 1, in which the inside base (3) of the body includes a central projection forming the valve seat (23), and sector-shaped projections (18).

## Patentansprüche

1. Elektrische Speicherbatterie mit einem Verschlussstopfen, um den Innenraum einer Speicherbatterie mit der Atmosphäre in Verbindung zu bringen und zwar nur jenseits eines bestimmten Drucks über dem Atmosphärendruck, wobei er ein Hauptstück (1) mit einem Teil (2) besitzt, das dicht, aber abnehmbar an eine Öffnung der Speicherbatterie angepasst ist und auf Höhe eines Innenbodens (3) einen zentralen Ringklappensitz (23) aufweist, der mit der Atmosphäre in Verbindung steht, aber normalerweise durch ein Verschlussteil verschlossen ist, sowie eine ringförmige Zone einer Membranklappe (5), die eine weitaus größere Fläche hat als der Querschnitt des Sitzes, und die mit ihrem Rand an dem genannten Hauptstück befestigt ist, wobei die genannte Membran (5) in Richtung des Verschlusses des Sitzes durch den Atmosphärendruck belastet wird, der auf einer ihrer Vorderseiten herrscht, sowie durch einen Kolben (10), der sich auf der genannten Vorderseite mittels einer Feder (12) abstützt, die in Abhängigkeit von dem oben genannten, feststehenden Druck geeicht ist und in Richtung Öffnung des Sitzes durch den Druck belastet wird, der in der Speicherbatterie herrscht, und dank einer Öffnung (28) im Innenboden (3) des Hauptstücks auf mindestens einen Teil der Vorderseite gegenüber der genannten Membran (5) wirkt, wobei sich die genannte Feder (12) hinten am Boden (8) einer Kammer (20) abstützt, die in dem Hauptstück gebildet wird, und den Kolben (10) und die genannte Feder (12) enthält, wobei ein Lüftungsloch (19), das die Verbindung zwischen der genannten Kammer (20) und der Atmosphäre herstellt, in dem genannten Boden (8) oder in seiner Nähe vorgesehen ist, **dadurch gekennzeichnet, dass** der Klappensitz (23) über eine Öffnung (26, 28) in dem Kolben (10) und dem Mittelteil der Membran (5) mit der Atmosphäre verbunden ist, wobei das Verschlussteil aus dem Mittelteil (29) des Innenbodens des Hauptstücks (3) besteht.

2. Speicherbatterie nach Anspruch 1, wobei der Innenboden (3) des Hauptstücks einen zentralen Höcker aufweist, der den Klappensitz (23) bildet, sowie sektorielle Höcker.
